# EUROPEAN PATENT APPLICATION

(11) **EP 2 515 545 A2**
(43) Date of publication of application: **24.10.2012**
(21) Application number: 11191977.5
(22) Date of filing: 05.12.2011
(51) Int. Cl.: H04N 13/04, H04N 13/00, H04N 21/2343

(54) **Video receiving apparatus and display mode switching method**

(30) Priority: 19.04.2011 JP 2011093412
(71) Applicant: Kabushiki Kaisha Toshiba, Tokyo 105-8001 (JP)
(72) Inventor: Kuwahara, Kazuki, Tokyo, 105-8001 (JP)
(74) Representative: Henkel, Breuer & Partner

(57) **Abstract**

According to one embodiment, a video receiving apparatus (100) includes a signal processor (107) configured to receive a video signal including an identifier indicating a video signal to be three-dimensionally displayed or a video signal to be two-dimensionally displayed, and to process the video signal to be able to be two-dimensionally and three-dimensionally displayed, and a three-dimensional setting module (121A) configured to control the signal processor (107) according to an automatic switching setting of display modes, which setting is configured to include a first setting for automatically setting a three-dimensional display mode when the identifier indicating a video signal to be three-dimensionally displayed is detected, and a second setting for two-dimensionally displaying a video signal to be three-dimensionally displayed and a video signal to be two-dimensionally displayed irrespective of the identifier. The three-dimensional setting module (121A) is configured to set a two-dimensional display mode irrespective of the identifier until a program ends when a display mode is switched to a two-dimensional display mode in the first setting, or the three-dimensional setting module (121A) is configured to automatically set a three-dimensional display mode when the display mode is switched to the three-dimensional display mode in the second setting and the identifier indicating a video signal to be three-dimensionally displayed is detected until the program ends.

## Description

Embodiments described herein relate generally to a video receiving apparatus and a display mode switching method.

A plurality of techniques, which allow a viewer to view right- and left-eye images by the right and left eyes, respectively, thus allowing to view a three-dimensional (3D) video picture, have been proposed. For example, when 3D glasses are used, a liquid crystal lens on the right eye side of the glasses is shielded upon displaying an image for the left eye on a screen, and a liquid crystal lens on the left eye side of the glasses is shielded upon displaying an image for the right eye on the screen, thus allowing to view a 3D video picture.

As a mode for recording and transmitting a 3D moving image, a "side-by-side" mode, "line-by-line" mode, "top-and-bottom" mode, and the like have been proposed. In the "side-by-side" mode of these modes, only a width of an image is compressed to 1/2 of an original image, and two images viewed from the right and left viewpoints are transmitted side by side. The widths of the images transmitted in the "side-by-side" mode are expanded to be doubled on a receiving apparatus side, thus obtaining the two images for the right and left eyes.

In the "top-and-bottom" mode, only a height of an image is compressed to 1/2 of an original image, and two images viewed from the right and left viewpoints are transmitted in tandem. The heights of the images transmitted in the "top-and-bottom" mode are expanded to be doubled on a receiving apparatus side, thus obtaining the two images for the right and left eyes.

A practical use of a video receiving apparatus which selectively displays a 3D video picture and a two-dimensional (2D) video picture using an identifier used to identify whether a transmitted content includes a video signal to be three-dimensionally displayed (3D-display video signal) or a video signal to be two-dimensionally displayed (2D-display video signal) has been examined.

A general architecture that implements the various features of the embodiments will now be described with reference to the drawings. The drawings and the associated descriptions are provided to illustrate the embodiments and not to limit the scope of the invention.
FIG. 1 is a schematic view showing the outer appearance of a video receiving apparatus according to an embodiment and an arrangement example together with 3D glasses;
FIG. 2 is a block diagram showing an arrangement example of a signal processing system of the video receiving apparatus according to the embodiment;
FIG. 3 is a view for explaining an example of a remote controller of the video receiving apparatus according to the embodiment;
FIG. 4 is a view showing an example of a 3D setting screen of the video receiving apparatus according to the embodiment;
FIG. 5 is a view showing an example of a 3D automatic switching screen of the video receiving apparatus according to the embodiment;
FIG. 6 is a view showing another example of the 3D automatic switching screen of the video receiving apparatus according to the embodiment;
FIG. 7 is a view showing an example of a 3D menu screen of the video receiving apparatus according to the embodiment; and
FIG. 8 is a flowchart for explaining an example of a switching operation between 3D and 2D display modes of the video receiving apparatus according to the embodiment.

Various embodiments will be described hereinafter with reference to the accompanying drawings.

In general, according to one embodiment, a video receiving apparatus comprises a signal processor configured to receive a video signal including an identifier indicating a video signal to be three-dimensionally displayed or a video signal to be two-dimensionally displayed, and to process the video signal to be able to be two-dimensionally and three-dimensionally displayed; and a three-dimensional setting module configured to control the signal processor according to an automatic switching setting of display modes, which setting is configured to include a first setting for automatically setting a three-dimensional display mode when the identifier indicating a video signal to be three-dimensionally displayed is detected, and a second setting for two-dimensionally displaying a video signal to be three-dimensionally displayed and a video signal to be two-dimensionally displayed irrespective of the identifier. The three-dimensional setting module is configured to set a two-dimensional display mode irrespective of the identifier until a program ends when a display mode is switched to a two-dimensional display mode in the first setting, or the three-dimensional setting module is configured to automatically set a three-dimensional display mode when the display mode is switched to the three-dimensional display mode in the second setting and the identifier indicating a video signal to be three-dimensionally displayed is detected until the program ends.

A video receiving apparatus and display mode switching method according to an embodiment will be described hereinafter with reference to the drawings.

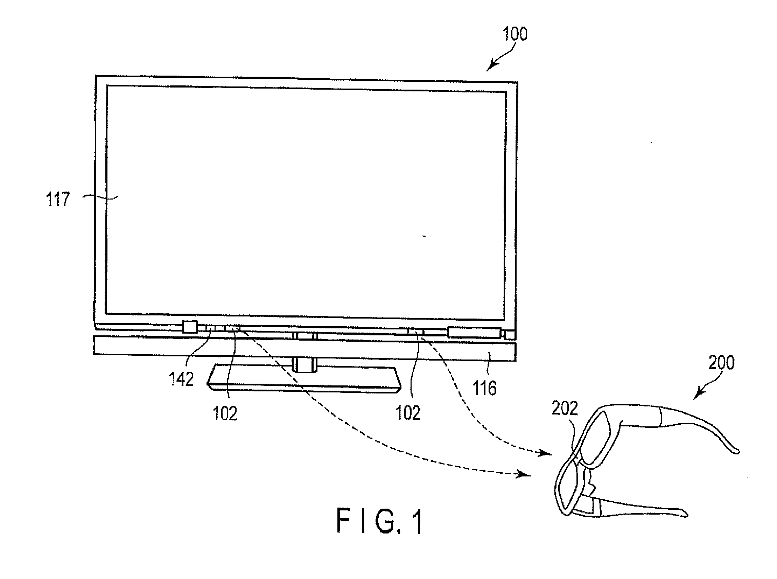

FIG. 1 schematically shows the outer appearance of the video receiving apparatus according to this embodiment, and an arrangement example together with 3D glasses used upon viewing a 3D video picture. Note that video signals received by the video receiving apparatus of this embodiment include those of a broadcast signal, a content supplied from a recording medium such as a DVD, and a content supplied via a network.

An example of alternately displaying right- and left-eye video pictures for respective frames on the video receiving apparatus 100 will be described below. Note that signals for the right- and left-eye video pictures may be sent from an external device, or may be generated in a pseudo manner from a 2D-display video signal inside a television receiving apparatus.

A video receiving apparatus 100 includes transmitters 102 which output right/left identification information indicating whether a currently displayed video picture is that for the right or left eye. A carrier of the right/left identification information may be any of wired lines, radio waves, and infrared rays. 3D glasses 200 include receivers 202, which receive the right/left identification information from the transmitters 102 to control shutter operations of right and left liquid crystal glasses to be synchronized with a displayed right or left video picture. Thus, a viewer can perceive a stereoscopic video picture by viewing a right-eye video picture by the right eye and a left-eye video picture by the left eye.

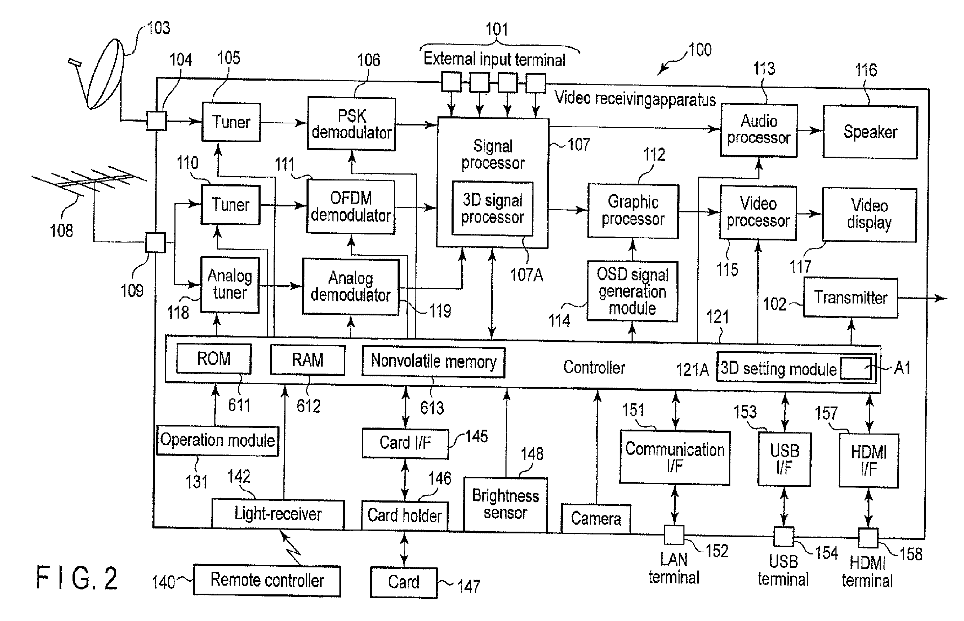

FIG. 2 shows a principal signal processing system of the video receiving apparatus 100.

The video receiving apparatus 100 of this embodiment includes a signal processor which processes a video signal including an identifier indicating a 3D- or 2D-display video signal to be able to be three- and two-dimensionally displayed, and a controller including a 3D setting module which detects the identifier of the video signal, which identifier indicates a 3D- or 2D-display video signal, and controls the signal processor according to an automatic switching setting of the display mode which allows a setting for automatically setting a 3D display mode when the identifier indicating a 3D-display video signal is detected, and a setting for two-dimensionally displaying 3D and 2D-display video signals regardless of the identifier.

The video receiving apparatus 100 includes, as receivers, a BS (broadcasting satellite)/CS (communication satellite) digital broadcast receiving antenna 103, a satellite digital broadcast tuner 105, a digitalized terrestrial broadcast receiving antenna 108, and a digitalized terrestrial broadcast tuner 110. That is, a satellite digital television broadcast signal received by the BS/CS digital broadcast receiving antenna 103 is supplied to the satellite digital broadcast tuner 105 via an input terminal 104, thus tuning a broadcast signal of a desired channel.

The broadcast signal tuned by the tuner 105 is supplied to a PSK (Phase Shift Keying) demodulator 106 to be demodulated into digital video and audio signals, which are then output to a signal processor 107.

A digitalized terrestrial television broadcast signal received by the digitalized terrestrial broadcast receiving antenna 108 is supplied to the digitalized terrestrial broadcast tuner 110 via an input terminal 109, thus tuning a broadcast signal of a desired channel.

The broadcast signal tuned by the tuner 110 is supplied to an OFDM (Orthogonal Frequency Division Multiplexing) demodulator 111 to be demodulated into digital video and audio signals, which are then output to the signal processor 107.

Also, an analog tuner 118 used to receive an analog terrestrial signal is arranged. A signal received by the analog tuner 118 is demodulated by an analog demodulator 119 into video and audio signals, which are then output to the signal processor 107.

Furthermore, a digital or analog audio signal and video signal including an identifier indicating a 3D- or 2D-display video signal can be input from an external device to the signal processor 107 via external input terminals 101.

The signal processor 107 selectively applies predetermined digital signal processing to the digital video and audio signals supplied from the PSK demodulator 106, the digital video and audio signals supplied from the OFDM demodulator 111, the video and audio signals supplied from the analog demodulator 119, and video and audio signals from line input terminals, and outputs processed signals to a graphic processor 112 and audio processor 113.

The signal processor 107 includes a 3D signal processor 107A which executes signal processing for the input video and audio signals according to a control signal from a controller 121 (to be described later) to obtain 3D video signals required to display right- and left-eye video pictures and an audio signal synchronized with those video signals.

When an input video signal is to be three-dimensionally displayed according to a control signal from the controller 121, the 3D signal processor 107A expands the widths (or heights) of right- and left-eye images included in one frame to be doubled, so as to generate right- and left-eye video pictures, and outputs the right- and left-eye video pictures to alternately display them.

Also, when an input 3D-display video signal is to be two-dimensionally displayed according to a control signal from the controller 121, the 3D signal processor 107A expands the width (or height) of, for example, a left-eye image included in one frame to be doubled, and outputs it to display a left-eye video picture alone.

The graphic processor 112 has a function of superimposing an OSD (On Screen Display) signal generated by an OSD signal generation module 114 on a digital video signal supplied from the signal processor 107, and outputting the superimposed signal. Also, the graphic processor 112 can selectively output an output video signal of the signal processor 107 and an output OSD signal of the OSD signal generation module 114, can superimpose these outputs, or can combine and output these outputs to respectively form halves of a screen.

The digital video signal output from the graphic processor 112 is supplied to a video processor 115. The video processor 115 converts the input digital video signal into an analog video signal of a format that can be displayed by a video display 117, and outputs the analog video signal to the video display 117, thus displaying a video picture.

The audio processor 113 converts the input digital audio signal into an analog audio signal of a format which can be played back by a loudspeaker 116, and outputs the analog audio signal to the loudspeaker 116, thus outputting a sound.

All of operations including the aforementioned various receiving operations of this video receiving apparatus 100 are systematically controlled by the controller 121.

The controller 121 incorporates a CPU (Central Processing Unit) and the like. Upon reception of operation information from an operation module 131 or upon reception of operation information output from a remote controller 140 via a light-receiver 142, the controller 121 systematically controls the respective modules to reflect the operation contents to the apparatus.

In this case, the controller 121 mainly uses a ROM (Read Only Memory) 611 which stores control programs to be executed by the CPU, a RAM (Random Access Memory) 612 which provides a work area to the CPU, and a nonvolatile memory 613 which stores various kinds of setting information and control information.

The controller 121 is connected, via a card I/F (Interface) 145, to a card holder 146 which can receive a first memory card 147. Then, the controller 121 can exchange information such as a video signal including an identifier indicating a 3D- or 2D-display video signal with the first memory card 147 attached to the card holder 146 via the card I/F 145. Although not shown, the controller 121 may be connected to another card holder, which can receive a second memory card, via another card I/F.

The controller 121 is connected to a brightness sensor 148. Then, the controller 121 can acquire ambient brightness information from this sensor, and can automatically control, for example, the brightness of a screen.

The controller 121 is connected to a first LAN terminal 152 via a communication I/F 151. Then, the controller 121 can exchange information such as a video signal, which is included in a content provided via, for example, a network, and which includes an identifier indicating a 3D- or 2D-display video signal, with a LAN-compatible HDD (hard disk drive) connected to the first LAN terminal 152 via the communication I/F 151. In this case, the controller 121 has a DHCP (Dynamic Host Configuration Protocol) server function, and controls the LAN-compatible HDD connected to the first LAN terminal 152 by assigning an IP (Internet Protocol) address to the HDD. The controller 121 may be connected to a second LAN terminal via another communication I/F although not shown.

The controller 121 is connected to a USB terminal 154 via a USB I/F 153. Then, the controller 121 can exchange information such as a video signal, which is included in a content provided from a recording medium such as a DVD, and which includes an identifier indicating a 3D- or 2D-display video signal, with each device connected to the USB terminal 154 via the USB I/F 153.

The controller 121 is connected to an i.Link® terminal 156 via an i.Link® I/F 155. Then, the controller 121 can exchange information such as a video signal including an identifier indicating a 3D- or 2D-display video signal with each device connected to the i.Link® terminal 156 via the i.Link® I/F 155.

The controller 121 can exchange information such as a video signal including an identifier indicating a 3D- or 2D-display video signal with each device connected to an HDMI (High Definition Multimedia Interface) terminal 158 via an HDMI I/F 157 which is compliant with the HDMI standard.

The controller 121 has a 3D setting module 121A which switches a display mode between 3D and 2D display modes based on a viewer's command supplied from the operation module 131 or the remote controller 140 via the light-receiver 142.

The 3D setting module 121A includes a selector A1 which allows to select a 2D or 3D display mode in response to, for example, an operation of the remote controller 140 by the viewer. When the 3D display mode is selected, the selector A1 outputs right/left identification signals to the transmitters 102 in synchronism with output timings of video signals to the video display 117.

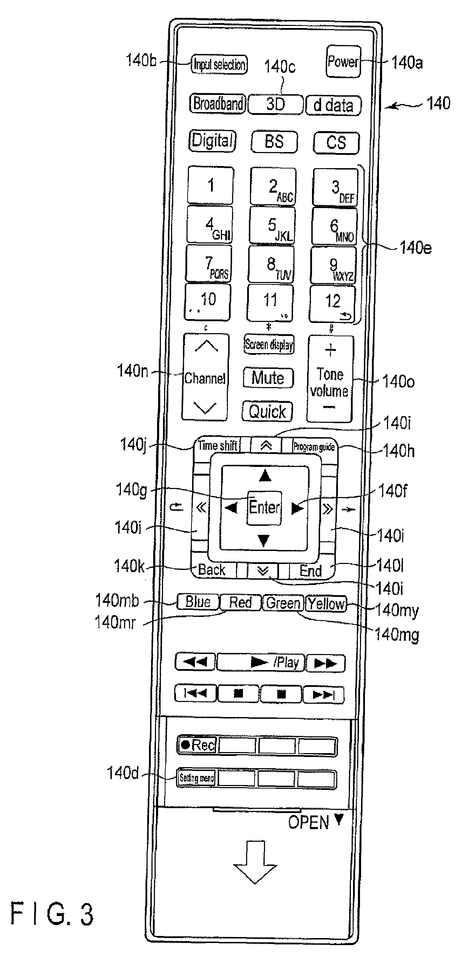

FIG. 3 shows the outer appearance of the remote controller 140. This remote controller 140 mainly includes a power key 140a, input selection key 140b, 3D key 140c, setting menu key 140d, direct tuning keys 140e of broadcast channels, cursor keys 140f, enter key 140g, program guide key 140h, page selection keys 140i, time shift key 140j, back key 140k, end key 1401, blue, red, green, and yellow color keys 140mb, 140mr, 140mg, and 140my, channel up/down key 140n, tone volume adjustment key 140o, and the like.

Examples of display mode setting and switching operations of the video receiving apparatus will be described below. When a viewer wants to make an automatic switching setting of a 3D display mode, he or she selects the setting menu key 140d of the remote controller 140. When the setting menu key 140d is selected, the controller 121 controls the OSD signal generation module 114 to display a menu screen. When the viewer selects a function setting from items on the menu screen, the controller 121 controls the OSD signal generation module 114 to display a function setting screen. When the viewer selects a 3D setting from items on the function setting screen, the controller 121 controls the OSD signal generation module 114 to display a 3D setting screen.

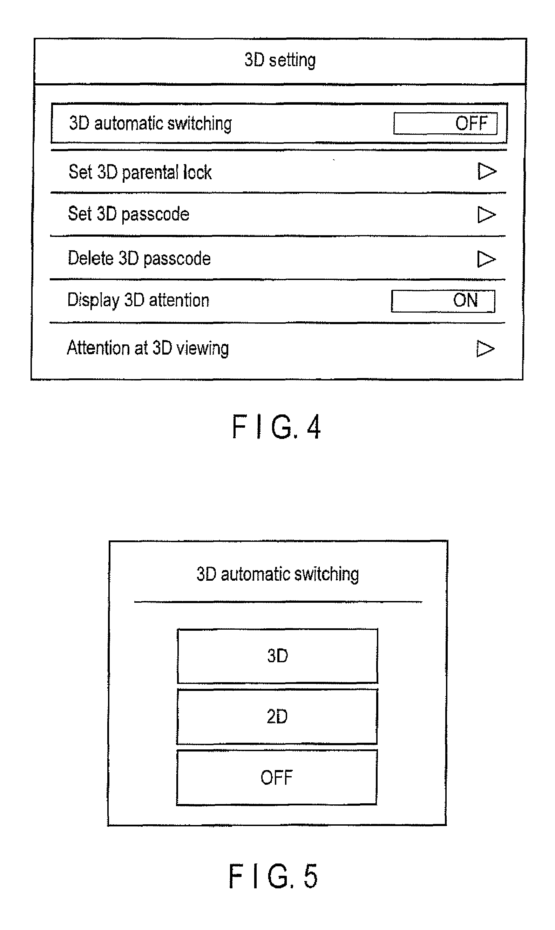

FIG. 4 shows an example of the 3D setting screen. The 3D setting screen displays items "3D automatic switching", "set 3D parental lock", "set 3D passcode", "delete 3D passcode", "display 3D attention", and "attention at 3D viewing". When the viewer selects "3D automatic switching" from these items, the controller 121 controls the OSD signal generation module 114 to display a 3D automatic switching screen.

FIG. 5 shows an example of the 3D automatic switching screen. The 3D automatic switching screen displays items "3D", "2D", and "OFF". When the viewer selects "3D", the 3D setting module 121A is set to automatically set the 3D display mode when an identifier indicating a 3D-display video signal is detected. Therefore, when, for example, a main title of a program is a video signal including an identifier indicating a 3D-display video signal, and a commercial message is a video signal including an identifier indicating a 2D-display video signal (or a video signal which does not include any identifier indicating a 3D-display video signal), the main title is three-dimensionally displayed, and the commercial message is two-dimensionally displayed.

When the viewer selects "2D", the 3D setting module 121A is set to automatically two-dimensionally display a 3D-display video signal and two-dimensionally display a 2D-display video signal, when an identifier indicating a 3D-display video signal is detected. Therefore, when, for example, a main title of a program is a video signal including an identifier indicating a 3D-display video signal, and a commercial message is a video signal including an identifier indicating a 2D-display video signal, both the main title and commercial message are two-dimensionally displayed.

When the viewer selects "OFF", the 3D setting module 121A is set to display a screen which prompts the viewer to select a 3D or 2D display mode when an identifier indicating a 3D-display video signal is detected. Therefore, when a main title of a program is a video signal including an identifier indicating a 3D-display video signal, and a commercial message is a video signal including an identifier indicating a 2D-display video signal, the screen which prompts the viewer to select the 3D or 2D display mode is displayed before the main title is displayed.

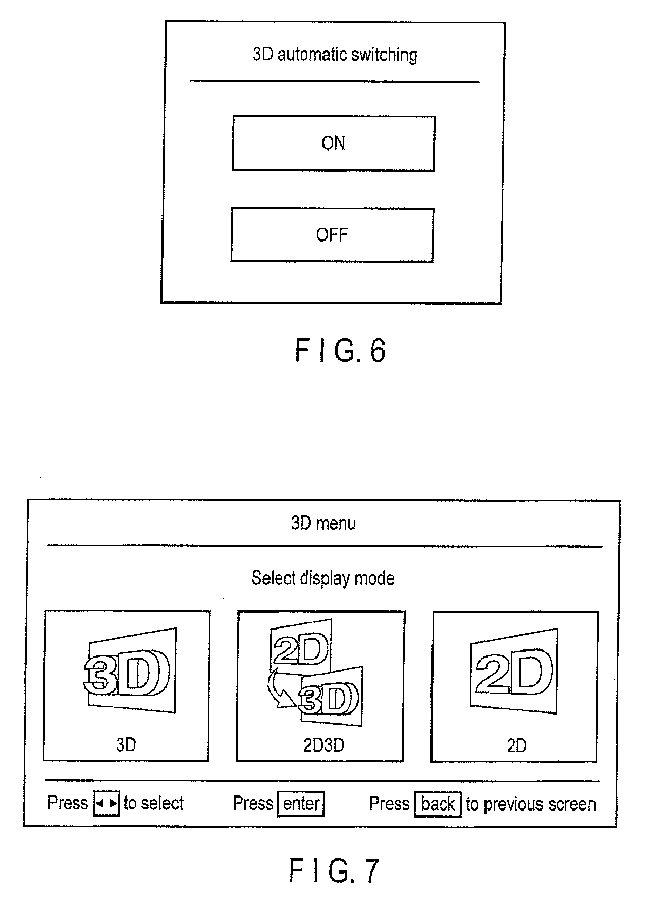

FIG. 6 shows another example of the 3D automatic switching screen. The 3D automatic switching screen shown in FIG. 6 displays items "ON" and "OFF". When the viewer selects "ON", the 3D setting module 121A is set to automatically set the 3D display mode when an identifier indicating a 3D-display video signal is detected. Therefore, when, for example, a main title of a program is a video signal including an identifier indicating a 3D-display video signal, and a commercial message is a video signal including an identifier indicating a 2D-display video signal, the main title is three-dimensionally displayed, and the commercial message is two-dimensionally displayed.

When the viewer selects "OFF", the 3D setting module 121A is set to display a screen which prompts the viewer to select a 3D or 2D display mode when an identifier indicating a 3D-display video signal is detected. Therefore, when a main title of a program is a video signal including an identifier indicating a 3D-display video signal, and a commercial message is a video signal including an identifier indicating a 2D-display video signal, the screen which prompts the viewer to select the 3D or 2D display mode is displayed before the main title is displayed.

Alternatively, when the viewer selects "OFF", the 3D setting module 121A may be set to automatically two-dimensionally display a 3D-display video signal and two-dimensionally display a 2D-display video signal, when an identifier indicating a 3D-display video signal is detected. Therefore, when, for example, a main title of a program is a video signal including an identifier indicating a 3D-display video signal, and a commercial message is a video signal including an identifier indicating a 2D-display video signal, both the main title and commercial message are two-dimensionally displayed.

The viewer can switch the 3D and 2D display modes by selecting the 3D key 140c of the remote controller 140 during viewing of a program. When the viewer switches the display mode from the 3D display mode to the 2D display mode (or vice versa) by selecting the 3D key 140c during viewing of a program, the video receiving apparatus 100 according to this embodiment maintains the 2D display mode (or 3D display mode) irrespective of the display setting set on the 3D automatic switching screen until the program ends.

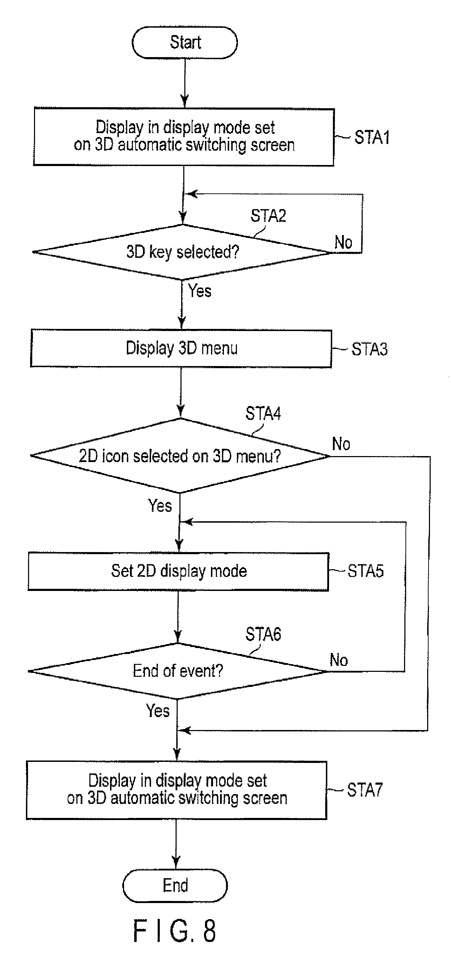

That is, the 3D setting module 121A displays a video signal according to a display mode set on the 3D automatic switching screen (step STA1). FIG. 8 shows a case in which, for example, the viewer selects "3D" on the 3D automatic switching screen to automatically set the 3D display mode. If the viewer selects the 3D key 140c of the remote controller 140 (step STA2), the selector A1 of the 3D setting module 121A controls the OSD signal generation module 114 to display a 3D menu (step STA3).

FIG. 7 shows an example of the 3D menu. The 3D menu displays a 3D icon, 2D3D icon, and 2D icon. The viewer can select one of these icons using the cursor keys 140f and enter key 140g of the remote controller 140. When the viewer selects the 3D icon, a 3D-display video signal is three-dimensionally displayed, and a 2D-display video signal is two-dimensionally displayed. When the viewer selects the 2D3D icon, a 2D-display video signal is converted into a 3D-display video signal, and the converted video signal is displayed. When the viewer selects the 2D icon, 2D and 3D-display video signals are two-dimensionally displayed.

The selector A1 of the 3D setting module 121A judges whether or not the viewer selects the 2D icon (step STA4). If the viewer selects the 2D icon, the 3D setting module 121A controls the signal processor 107 to two-dimensionally display a 3D-display video signal when an identifier indicating a 3D-display video signal is detected, and to two-dimensionally display a 2D-display video signal when an identifier indicating a 2D-display video signal is detected (step STA5).

Subsequently, the 3D setting module 121A judges based on the received video signal whether or not an event (program) which is being viewed by the viewer ends (step STA6), and maintains the 3D display setting on the 3D menu screen until the program ends.

That is, when a video signal includes a first video signal including an identifier indicating a 3D-display video signal and a second video signal including an identifier indicating a 2D-display video signal, and when the viewer sets to automatically set the 3D display mode on the 3D automatic switching screen, and switches the display mode to the 2D display mode according to his or her operation, the 3D setting module 121A two-dimensionally displays the first and second video signals. Therefore, when, for example, a main title of a program is a video signal including an identifier indicating a 3D-display video signal, and a commercial message is a video signal including an identifier indicating a 2D-display video signal, both the main title and commercial message are two-dimensionally displayed. Furthermore, when a main title of a program includes a video signal including an identifier indicating a 3D-display video signal, and a video signal including an identifier indicating a 2D-display video signal, the main title is two-dimensionally displayed irrespective of the identifiers.

If the program ends, and if the viewer does not select "2D" in step STA4, the 3D setting module 121A displays an image in the display mode set on the 3D automatic switching screen. In the example shown in FIG. 8, the setting is restored to that for automatically setting the 3D display mode. Therefore, the 3D setting module 121A controls the signal processor 107 to automatically set the 3D display mode when an identifier indicating a 3D-display video signal is detected, and to set the 2D display mode when an identifier indicating a 2D-display video signal is detected, and the 3D signal processor 107A executes predetermined signal processing.

When a 3D-display video signal is two-dimensionally displayed, the 3D setting module 121A controls the OSD signal generation module 114 to display a message that advises accordingly on a display screen, thus presenting to the viewer that the video signal can be three-dimensionally displayed by changing the setting.

When the viewer sets on the 3D automatic switching screen to automatically set the 3D display mode upon detection of an identifier indicating a 3D-display video signal and to automatically set the 2D display mode upon detection of an identifier indicating a 2D-display video signal, and when he or she selects the 3D icon on the 3D menu, the 3D setting module 121A controls the 3D signal processor 107A of the signal processor 107 to automatically set the 3D display mode when the identifier indicating a 3D-display video signal is detected, and to automatically set the 2D display mode when the identifier indicating a 2D-display video signal is detected. Even after a program ends, the 3D setting module 121A similarly controls the signal processor 107 to automatically set the 3D display mode when the identifier indicating a 3D-display video signal is detected, and to automatically set the 2D display mode when the identifier indicating a 2D-display video signal is detected.

When the viewer sets on the 3D automatic switching screen to automatically set the 3D display mode upon detection of an identifier indicating a 3D-display video signal and to automatically set the 2D display mode upon detection of an identifier indicating a 2D-display video signal, and when he or she selects the 2D3D icon on the 3D menu, the 3D setting module 121A controls the 3D signal processor 107A of the signal processor 107 to automatically set the 3D display mode when the identifier indicating a 3D-display video signal is detected, and to form a 3D-display video signal from a 2D-display video signal and three-dimensionally display that video signal when the identifier indicating a 2D-display video signal is detected. After a program ends, the 3D setting module 121A controls the signal processor 107 to automatically set the 3D display mode when the identifier indicating a 3D-display video signal is detected, and to automatically set the 2D display mode when the identifier indicating a 2D-display video signal is detected.

When the viewer sets to automatically set the 2D display mode irrespective of an identifier on the 3D automatic setting screen, and when he or she selects the 3D icon on the 3D menu, the 3D setting module 121A controls the 3D signal processor 107A of the signal processor 107 to automatically set the 3D display mode when the identifier indicating a 3D-display video signal is detected, and to automatically set the 2D display mode when the identifier indicating a 2D-display video signal is detected. After a program ends, the 3D setting module 121A controls the signal processor 107 to two-dimensionally display 3D- and 2D-display video signals irrespective of identifiers.

That is, when a video signal includes a first video signal including an identifier indicating a 3D-display video signal and a second video signal including an identifier indicating a 2D-display video signal, and when the viewer sets to automatically set the 2D display mode on the 3D automatic switching screen, and switches the display mode to the 3D display mode according to a his or her operation, the 3D setting module 121A three-dimensionally displays the first video signal, and two-dimensionally displays the second video signal. Therefore, when, for example, a main title of a program is a video signal including an identifier indicating a 3D-display video signal, and a commercial message is a video signal including an identifier indicating a 2D-display video signal, the main title is three-dimensionally displayed, and the commercial message is two-dimensionally displayed. Furthermore, when a main title of a program includes a video signal including an identifier indicating a 3D-display video signal and a video signal including an identifier indicating a 2D-display video signal, the 3D display mode is automatically set upon detection of the identifier indicating a 3D-display video signal in the main title, and the 2D display mode is automatically set upon detection of the identifier indicating a 2D-display video signal.

When the viewer sets to automatically set the 2D display mode irrespective of an identifier on the 3D automatic setting screen, and when he or she selects the 2D icon on the 3D menu, the 3D setting module 121A controls the 3D signal processor 107A of the signal processor 107 to automatically set the 2D display mode irrespective of the identifiers. Even after a program ends, the 3D setting module 121A controls the signal processor 107 to two-dimensionally display 3D- and 2D-display video signals irrespective of the identifiers.

When the viewer sets to automatically set the 2D display mode irrespective of an identifier on the 3D automatic setting screen, and when he or she selects the 2D3D icon on the 3D menu, the 3D setting module 121A controls the 3D signal processor 107A of the signal processor 107 to automatically set the 3D or 2D display mode when an identifier indicating a 3D-display video signal is detected, and to form a 3D-display video signal from a 2D-display video signal and three-dimensionally display that video signal when an identifier indicating a 2D-display video signal is detected. After a program ends, the 3D setting module 121A controls the signal processor 107 to two-dimensionally display 3D- and 2D-display video signals irrespective of the identifiers.

When the viewer sets the 3D-display automatic switching mode = OFF on the 3D automatic switching screen, and he or she selects the 3D icon on the 3D menu, the 3D setting module 121A controls the 3D signal processor 107A of the signal processor 107 to automatically set the 3D display mode when the identifier indicating a 3D-display video signal is detected, and to automatically set the 2D display mode when the identifier indicating a 2D-display video signal is detected. After a program ends, the 3D setting module 121A controls the OSD signal generation module 114 to display the screen which prompts the viewer to select the 2D or 3D display mode upon detection of an identifier indicating a 3D-display video signal, and follows the display mode selected on the displayed screen.

When the viewer sets the 3D-display automatic switching mode = OFF on the 3D automatic switching screen, and he or she selects the 2D icon on the 3D menu, the 3D setting module 121A controls the 3D signal processor 107A of the signal processor 107 to automatically two-dimensionally display 3D- and 2D-display video signals. After a program ends, the 3D setting module 121A controls the OSD signal generation module 114 to display the screen which prompts the viewer to select the 2D or 3D display mode upon detection of an identifier indicating a 3D-display video signal, and follows the display mode selected on the displayed screen.

When the viewer sets the 3D-display automatic switching mode = OFF on the 3D automatic switching screen, and when he or she selects the 2D3D icon on the 3D menu, the 3D setting module 121A controls the 3D signal processor 107A of the signal processor 107 to automatically set the 3D or 2D display mode when an identifier indicating a 3D-display video signal is detected, and to form a 3D-display video signal from a 2D-display video signal and three-dimensionally display that video signal when an identifier indicating a 2D-display video signal is detected. After a program ends, the 3D setting module 121A controls the OSD signal generation module 114 to display the screen which prompts the viewer to select the 2D or 3D display mode upon detection of an identifier indicating a 3D-display video signal, and follows the display mode selected on the displayed screen.

As described above, when the viewer manually switches the 3D or 2D display mode during viewing of a program, the video receiving apparatus according to this embodiment executes a display operation selected by the viewer irrespective of the automatic switching setting in the program which is being viewed. Therefore, comfortable viewing by the viewer can be ensured without disturbance due to alternate viewing of 3D and 2D video pictures. Also, only a program to be viewed by a specific viewer such as a child can be avoided from being three-dimensionally displayed.

In the video receiving apparatus according to this embodiment, since the setting on the 3D menu is maintained within a single program, when a 3D-display video signal is received in the next program, the apparatus follows the 3D automatic switching setting, thus assuring high usability for the viewer.

That is, according to the video receiving apparatus of this embodiment, a video receiving apparatus and display mode switching method, which can attain switching between 3D and 2D display modes while allowing for the viewer's intention, and can assure high usability, can be provided.

Note that the video receiving apparatus of this embodiment is configured to restore the automatic switching setting from the display mode set by the viewer on the 3D menu after a program ends. Alternatively, the video receiving apparatus may be configured to restore the automatic switching setting from the display mode set on the 3D menu when the viewer changes a channel or turns off the power switch of the apparatus. Even in this case, the same effects as in the aforementioned embodiment can be obtained.

The video receiving apparatus includes the video display and loudspeaker. Alternatively, the video display and loudspeaker may be externally attached to the apparatus without being built in. Even in this case, the same effects as in the aforementioned embodiment can be obtained.

A video signal including an identifier indicating a 2D-display video signal may be that which does not include any identifier indicating a 3D-video signal.

## Claims

1. A video receiving apparatus (100) **characterized by** comprising:
a signal processor (107) configured to receive a video signal including an identifier indicating a video signal to be three-dimensionally displayed or a video signal to be two-dimensionally displayed, and to process the video signal to be able to be two-dimensionally and three-dimensionally displayed; and
a three-dimensional setting module (121A) configured to control the signal processor according to an automatic switching setting of display modes, which setting is configured to include a first setting for automatically setting a three-dimensional display mode when the identifier indicating a video signal to be three-dimensionally displayed is detected, and a second setting for two-dimensionally displaying a video signal to be three-dimensionally displayed and a video signal to be two-dimensionally displayed irrespective of the identifier,
wherein the three-dimensional setting module (121A) is configured to set a two-dimensional display mode irrespective of the identifier until a program ends when a display mode is switched to the two-dimensional display mode according to a user operation in the first setting, or the three-dimensional setting module (121A) is configured to automatically set a three-dimensional display mode when the display mode is switched to the three-dimensional display mode according to a user operation in the second setting and the identifier indicating a video signal to be three-dimensionally displayed is detected until the program ends.

2. The apparatus of claim 1, **characterized in that** when a video signal includes a first video signal including an identifier indicating a video signal to be three-dimensionally displayed and a second video signal including an identifier indicating a video signal to be two-dimensionally displayed, and when the display mode is switched to the two-dimensional display mode according to a user operation in the first setting, the three-dimensional setting module (121A) is configured to two-dimensionally display the first video signal and the second video signal.

3. The apparatus of claim 2, **characterized in that** the first video signal is a video signal of a main title of a program, and the second video signal is a video signal of a commercial message inserted in the main title of the program.

4. The apparatus of any one of claims 1 to 3, **characterized in that** the three-dimensional setting module (121A) comprises a selection module (A1) configured to allow to select the two-dimensional display mode or the three-dimensional display mode according to a user operation.

5. The apparatus of any one of claims 1 to 3, **characterized in that** the signal processor (107) comprises a three-dimensional signal processor (107A) configured to convert the video signal into a three-dimensional video signal required to display a right-eye video picture and a left-eye video picture.

6. The apparatus of claim 1 or 5, **characterized by** further comprising:
an OSD signal generation module (114) configured to generate an OSD signal; and
a graphic processor (112) configured to generate an image to be displayed based on a signal output from the OSD signal generation module (114) and a signal output from the signal processor (107),
wherein the three-dimensional setting module (121A) is configured to control, when a video signal to be three-dimensionally displayed is two-dimensionally displayed, the OSD signal generation module (114) to display a message that advises accordingly.

7. The apparatus of any one of claims 1 to 6, **characterized in that** the three-dimensional setting module (121A) is configured to restore the display mode according to the setting in the automatic switching setting after the program ends.

8. The apparatus of any one of claims 1 to 7, **characterized by** further comprising a video display (117) configured to display a video signal output from the signal processor.

9. The apparatus of any one of claims 1 to 8, **characterized by** further comprising a transmitter (102) configured to output right/left identification information indicating whether a currently displayed video picture is a right-eye video picture or a left-eye video picture.

10. A display mode switching method of a video receiving apparatus (100) which comprises:
a signal processor (107) configured to receive a video signal including an identifier indicating a video signal to be three-dimensionally displayed or a video signal to be two-dimensionally displayed, and to process the video signal to be able to be two-dimensionally and three-dimensionally displayed; and
a three-dimensional setting module (121A) configured to control the signal processor according to an automatic switching setting of display modes, which setting is configured to include a first setting for automatically setting a three-dimensional display mode when the identifier indicating a video signal to be three-dimensionally displayed is detected, and a second setting for setting a two-dimensional display mode irrespective of the identifier,
the method **characterized by** comprising:
causing the three dimensional setting module (121A) to set a two dimensional display mode irrespective of the identifier until a program ends when a display mode is switched to the two-dimensional display mode in the first setting; and
causing the three dimensional setting module (121A) to automatically set a three-dimensional display mode when the display mode is switched to the three-dimensional display mode in the second setting and the identifier indicating a video signal to be three-dimensionally displayed is detected until the program ends

11. The method of claim 10, **characterized in that** the video receiving apparatus (100) further comprises:
an OSD signal generation module(114) configured to generate an OSD signal; and
a graphic processor (112) configured to generate an image to be displayed based on a signal output from the OSD signal generation module (114) and a signal output from the signal processor (107), and
the method further comprises:
causing the three dimensional setting module (121A) to control the OSD signal generation module (114) to display a message indicating that a video signal to be three-dimensionally displayed is two-dimensionally displayed when the video signal to be three-dimensionally displayed is two-dimensionally displayed.
